# EUROPÄISCHE PATENTSCHRIFT

(11) **EP 1 719 936 B1**
(45) Veröffentlichungstag und Bekanntmachung des Hinweises auf die Patenterteilung: **20.01.2010**
(21) Anmeldenummer: 06003307.3
(22) Anmeldetag: 17.02.2006
(51) Int. Cl.: F16J 1/18, F16B 21/18

(54) **Kolben mit einer Kolbenbolzensicherung sowie Werkzeug zur Montage einer derartigen Kolbenbolzensicherung**
Piston with gudgeon-pin retainer and tool for mounting the same
Piston avec anneau d'arrêt de l'axe traversant le piston et son outil de montage

(30) Priorität: 04.05.2005 DE 102005020954
(43) Veröffentlichungstag der Anmeldung: 08.11.2006
(73) Patentinhaber: Dr. Ing. h.c. F. Porsche Aktiengesellschaft, 70435 Stuttgart (DE)
(72) Erfinder: Rutschmann, Erwin, 75233 Tiefenbronn (DE); Grünberger, Joachim, 74343 Sachsenheim (DE); Wieg, Thorsten, 75181 Pforzheim (DE)

(56) Entgegenhaltungen:
- DE-B- 1 021 636
- DE-C- 710 596
- US-A- 1 415 422
- PATENT ABSTRACTS OF JAPAN Bd. 2000, Nr. 24, 11. Mai 2001 (2001-05-11) -& JP 2001 182830 A (TRW AUTOMOTIVE JAPAN KK), 6. Juli 2001 (2001-07-06)

## Beschreibung

Die Erfindung betrifft einen Kolben mit einer Kolbenbolzensicherung sowie ein Verfahren zur Montage einer derartigen Kolbenbolzensicherung .

Aus der DE 197 54 719 A1 ist ein Kolben mit einem Kolbenbolzen und zumindest einer Kolbenbolzensicherung bekannt, bei der der tellerförmig ausgebildete Sicherungsring mit Überdeckung in die Bohrung des Kolbens eingepresst ist. Nachteilig dabei ist, dass bei der Montage die Gefahr besteht, dass es zum Materialabtrag im Kolben kommt. Wenn der Kolbenbolzen auf den Sicherungsring drückt, verstemmt sich dieser im Kolben, so dass ein weiterer Materialabtrag zu befürchten ist. Nach einer Demontage ist damit eine Wiederverwendung des Kolbens u.U. nicht mehr möglich.

Weiterhin ist aus der DE 710 596 C eine Kolbenbolzensicherung bekannt, bei der im Bolzenlager federnde Sicherungsscheiben mit radialer und axialer Spannungskraftausnutzung so angeordnet sind, dass durch sie eine axiale Verschiebung des Bolzens verhindert wird, wobei die Seitenflächen des Bolzens leicht abgeschrägt sind, um eine größere Auflagefläche zu erzielen.

Aufgabe der Erfindung ist es, die oben geschilderten Nachteile zu vermeiden.

Die Aufgabe wird durch die im Anspruch 1 sowie im Anspruch 3 angegebenen Merkmale gelöst.

Wesentlich bei der vorgeschlagenen Lösung ist, dass man zur Fixierung des Sicherungsringes im Kolben weiterhin eine im Kolben eingebrachte Ringnut verwendet. Bei der Benutzung eines entsprechenden Montagewerkzeuges kann der Sicherungsring mit seinem kegelstumpfartig ausgebildeten Abschnitt auf einen mit einem Gegenkonus versehenen Werkzeugabschnitt aufgeschoben werden, so dass sich der geschlitzt ausgeführte kegelstumpfartige Abschnitt des Sicherungsringes entsprechend aufweitet; damit verringert sich der Außendurchmesser des Sicherungsringes und letzterer kann auf einfache Art und Weise in der Ringnut fixiert werden. Der sich erweiternde Teil der Kolbenbolzenbohrung dient dabei als Anschlagfläche für den kegelstumpfförmig ausgebildeten Abschnitt des Sicherungsringes, so dass letzterer lagerichtig platziert ist und das Werkzeug zurückgezogen werden kann. Damit ist eine Montage und Demontage ohne Beschädigung des Kolbens und des Sicherungsringes möglich. Der erfindungsgemäße Sicherungsring kann darüber hinaus hinsichtlich seiner Lage einbauneutral verbaut werden. Die Bauform macht den Einsatz in Hochdrehzahlmotoren möglich. Durch den schnellen Ein- und Ausbau des Sicherungsringes ist eine hohe Prozesssicherheit gewährleistet, da er mit den Kolbenbolzen gemeinsam montiert bzw. demontiert werden kann.

Durch die im abhängigen Anspruch 2 angegebenen Merkmale sind vorteilhafte Weiterbildungen und Ausgestaltungen des Kolbens möglich.

Für eine dauerhaltbare Fixierung des Kolbenbolzen-Sicherungsringes weist dieser an seinem Außenumfang einen umgebördelten Rand auf, der im montierten Zustand in der Ringnut aufgenommen ist.

Das Verfahren zur Montage des Kolbenbolzensicherungsringes wird mit Hilfe eines Werkzeugs ausgeführt, das sich dadurch auszeichnet, dass ein Einsetzdorn mit einer kegelstumpfartigen Auflagefläche für den Sicherungsring vorgesehen ist.

Der Einsetzdorn weist dabei die drei nachfolgend aufgeführten Abschnitte auf:

Einen ersten zylinderförmigen Abschnitt, der in die Bohrung des Kolbenbolzens einführbar ist, einen zweiten Abschnitt, der mit der kegelstumpfartigen Auflagefläche für den Sicherungsring versehen ist und einen dritten Abschnitt, der als Hülse ausgebildet ist, deren dem Sicherungsring zugewandte Stirnseite im Durchmesser im wesentlichen mit dem Außendurchmesser des Sicherungsringes übereinstimmt.

In der Zeichnung ist ein Ausführungsbeispiel der Erfindung gezeigt, die nachstehend näher beschrieben ist. Es zeigen
- Fig. 1: einen Kolbenbolzen-Sicherungsring,
- Fig. 2: einen Kolben mit einem Montagewerkzeug für den Kolbenbolzen-Sicherungsring und
- Fig. 3: den Kolben mit Kolbenbolzen und Kolbenbolzen-Sicherungsring im montierten Zustand.

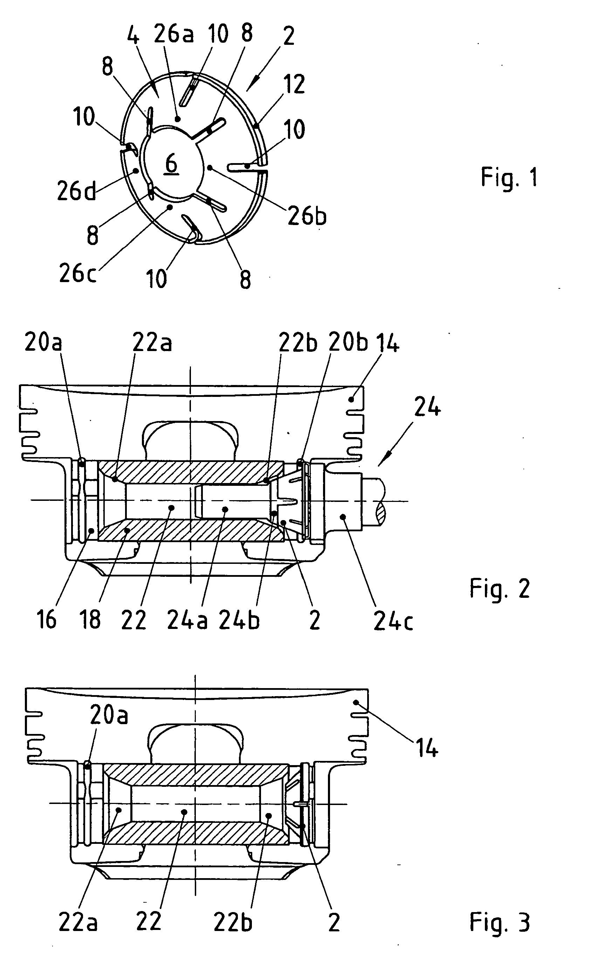

Der in Fig. 1 dargestellte Kolbenbolzen-Sicherungsring 2 weist eine kegelstumpfartig ausgebildete Mantelfläche 4 auf, in die von einer zentralen Öffnung 6 ausgehend, radial nach außen führende erste Schlitze 8 eingebracht sind. Vom Außenumfang des Sicherungsringes 2 ausgehend sind in Richtung der zentralen Öffnung 6 zweite Schlitze 10 eingebracht. Die ersten und zweiten Schlitze 8 und 10 sind im gleichmäßigen Abstand zueinander angeordnet. Der Sicherungsring 2 ist an seinem Außenumfang mit einem umgebördelten Rand 12 versehen.

In Fig. 2 ist ein Kolben 14 einer Brennkraftmaschine dargestellt, der auf bekannte Art und Weise eine Bohrung 16 aufweist, in der zur Lagerung des kleinen Pleuelauges des Pleuels (nicht dargestellt) ein Kolbenbolzen 18 aufgenommen ist. Zur Sicherung des Kolbenbolzens 18 in der Bohrung 16 ist auf beiden Seiten der in Fig. 1 dargestellte Sicherungsring 2 vorgesehen (in Fig. 2 ist nur der rechte Sicherungsring 2 dargestellt). Dazu ist auf beiden Seiten in der Bohrung 16 bzw. im Kolben 14 eine Ringnut 20a, 20b eingebracht, in die - wie später noch näher erläutert - der Sicherungsring mit seinem umgebördelten Rand 12 Aufnahme findet.

Der Kolbenbolzen 18 weist eine durchgehende Bohrung 22 auf, die sich an ihren beiden Enden nach außen hin erweitert; im folgenden werden diese Abschnitte als 22a und 22b bezeichnet.

Zur Montage bzw. Demontage des Kolbenbolzen-Sicherungsringes 2 ist ein Werkzeug in Form eines Einsetzdornes 24 vorgesehen, der im wesentlichen aus folgenden drei Abschnitten aufgebaut ist: Ein erster zylinderförmiger Abschnitt 24a, ein zweiter Abschnitt 24b, der als kegelstumpfartige Auflagefläche für den Sicherungsring 2 ausgebildet ist und einen dritten Abschnitt 24c, der mit einer Hülse versehen ist, deren dem Sicherungsring 2 zugewandte Stirnseite im Durchmesser im wesentlichen mit dem Außendurchmesser des Sicherungsringes 2 bzw. dem Durchmesser der Bohrung 16 übereinstimmt.

Die Montage des Kolbenbolzen-Sicherungsringes 2 erfolgt dabei auf folgende Art und Weise:

Der Sicherungsring 2 wird mit seiner Mantelfläche 4 auf die konisch bzw. kegelstumpfartig ausgebildete Auflagefläche 24b des Einsetzdornes 24 aufgeschoben. Aufgrund der in der Mantelfläche 4 eingebrachten Schlitze 8 weiten sich die zwischen den Schlitzen 8 ausgebildeten Kreisbogensegmente 26a bis 26d entsprechend auf, so dass sich der Außendurchmesser des Sicherungsringes 2 um einen Betrag x entsprechend verringert. Damit kann der Sicherungsring 2 in die entsprechend dimensionierte Bohrung 16 des Kolbens 14 eingeschoben werden, wobei der zylindrische Abschnitt 24a des Einsetzdornes 24 in der Bohrung 22 des Kolbenbolzens 18 als Führung Aufnahme findet. Mittels der (Fixier-)Hülse 24c des Einsetzdornes 24 wird der Sicherungsring 2 gegen den Rand des Abschnittes 22a bzw. 22b der Kolbenbolzenbohrung 22 gedrückt und somit in der Montageposition gehalten. Beim Abziehen des Einsetzdornes 24 wird der Sicherungsring 2 wieder entspannt, so dass er über seinen umgebördelten Rand 12 in die im Kolben 14 befindliche Ring- bzw. Sicherungsnut 20a, 20b eingreift. Der montierte Zustand des Sicherungsringes 2 ist in Fig. 3 dargestellt. Die Demontage des Kolbenbolzen-Sicherungsringes 2 erfolgt durch ein Einrücken des Einsetzdornes 24 in die Öffnung 6 des Sicherungsringes 2, wobei sich der Sicherungsring 2 wiederum am Kolbenbolzen 18 abstützt; durch das Einrücken des Einsetzdornes 24 verringert sich wiederum der Außendurchmesser des Sicherungsringes 2 und der Sicherungsring 2 kann zusammen mit dem Kolbenbolzen 18 aus dem Kolben 14 gezogen werden.

## Patentansprüche

1. Kolben (14) mit einem Kolbenbolzen (18), der in einer Kolbenbolzenbohrung (16) aufgenommen ist, sowie mit mindestens einer Kolbenbolzensicherung, die als geschlitzter kegelstumpfförmiger Sicherungsring (2) ausgebildet ist, wobei in der Kolbenbolzenbohrung (16) mindestens eine Ringnut (20a, 20b) eingebracht ist, in die der Sicherungsring (2) aufgenommen ist und der Kolbenbolzen (18) eine durchgehende Bohrung (22) aufweist, die sich an ihren beiden Enden erweitert, wobei der sich erweiternde Abschnitt (22a, 22b) der Bohrung (22) als Anschlagfläche für die kegelstumpfförmig ausgebildete Mantelfläche (4) des Sicherungsringes (2) dient,
**dadurch gekennzeichnet, dass**
der Sicherungsring (2) von einer zentralen Öffnung (6) ausgehend, radial nach außen führend, ausgebildete erste Schlitze (8) und vom Außenumfang des Sicherungsringes (2) ausgehend in Richtung der zentralen Öffnung (6), ausgebildete zweite Schlitze (10) aufweist.

2. Kolben nach Anspruch 2, **dadurch gekennzeichnet, dass** der Sicherungsring (2) an seinem Außenumfang einen umgebördelten Rand (12) aufweist, der im montierten Zustand in der Ringnut (20a, 20b) aufgenommen ist.

3. Verfahren zur Montage einer Kolbenbolzensicherung, die als kegelstumpfartiger und geschlitzter Sicherungsring (2) ausgebildet ist, wobei
- zur Durchführung der Montage ein Einsetzdorn (24) mit einer kegelstumpfartigen Auflagefläche (24b) für den Sicherungsring (2) vorgesehen ist, und
- der Sicherungsring (2) mit seiner Mantelfläche (4) auf die konisch oder kegelstumpfartig ausgebildete Auflagefläche (24b) des Einsetzdornes 24 aufgeschoben wird, und wobei
- sich aufgrund der in der Mantelfläche (4) des Sicherungsringe vorgesehenen Schlitze (8) die zwischen den Schlitzen (8) ausgebildeten Kreisbogensegmente (26a bis 26d) aufweiten, so dass
- sich der Außendurchmesser des Sicherungsringes (2) um einen Betrag (x) verringert, und
- der Sicherungsring (2) in eine entsprechend dimensionierte Bohrung (16) des Kolbens (14) eingeschoben wird.

4. Verfahren nach Anspruch 3, **dadurch gekennzeichnet, dass** der Einsetzdorn (24) folgende drei Abschnitte aufweist:
• einen ersten zylinderförmigen Abschnitt (24a), der in eine Bohrung (22) eines Kolbenbolzens (18) einführbar ist,
• einen zweiten Abschnitt, der als kegelstumpfartige Auflagefläche (24b) ausgebildet ist und
• einen dritten Abschnitt, der mit einer Hülse (24c) versehen ist, deren dem Sicherungsring (2) zugewandte Stirnseite im Durchmesser im wesentlichen mit dem Außendurchmesser des Sicherungsringes (2) übereinstimmt.

## Claims

1. Piston (14) having a gudgeon pin (18) which is held in a gudgeon-pin bore (16) and also having at least one gudgeon-pin retainer which is designed as a slotted frustoconical retaining ring (2), with the gudgeon-pin bore (16) having formed in it at least one annular groove (20a, 20b) in which the retaining ring (2) is held, and with the gudgeon pin (18) having a through bore (22) which widens at its two ends, with the widening section (22a, 22b) of the bore (22) serving as a stop surface for the frustoconical lateral surface (4) of the retaining ring (2),
**characterized in that**
the retaining ring (2) has first slots (8) formed proceeding from a central opening (6) and leading radially outward and second slots (10) formed proceeding from the outer circumference of the retaining ring (2) in the direction of the central opening (6).

2. Piston according to Claim 2, **characterized in that** the retaining ring (2) has, on its outer circumference, a flanged edge (12) which is held in the annular groove (20a, 20b) in the mounted state.

3. Method for mounting a gudgeon-pin retainer which is designed as a frustoconical and slotted securing ring (2), wherein,
- to carry out the mounting process, an insertion peg (24) which has a frustoconical support surface (24b) for the retaining ring (2) is provided and
- the retaining ring (2) is pushed with its lateral surface (4) onto the conical or frustoconical support surface (24b) of the insertion peg (24), and wherein,
- on account of the slots (8) provided in the lateral surface (4) of the retaining ring, the circular-arc-shaped segments (26a to 26d) which are formed between the slots (8) are flared such that
- the outer diameter of the retaining ring (2) is reduced by a magnitude (x), and
- the retaining ring (2) is pushed into a correspondingly dimensioned bore (16) of the piston (14).

4. Method according to Claim 3, **characterized in that** the insertion peg (24) has the following three sections:
• a first cylindrical section (24a) which can be inserted into a bore (22) of a gudgeon pin (18).
• a second section which is designed as a frustoconical support surface (24b), and
• a third section which is provided with a sleeve (24c) whose end side which faces toward the retaining ring (2) substantially corresponds, in terms of diameter, to the outer diameter of the retaining ring (2).

## Revendications

1. Piston (14) comprenant un boulon de piston (18), qui est reçu dans un alésage de boulon de piston (16), ainsi qu'au moins une fixation de boulon de piston qui est réalisée sous forme de bague de fixation (2) de forme tronconique fendue, au moins une rainure annulaire (20a, 20b) étant pratiquée dans l'alésage de boulon de piston (16), dans laquelle est reçue la bague de fixation (2), et le boulon de piston (18) présentant un alésage traversant (22) qui s'élargit à ses deux extrémités, la portion s'élargissant (22a, 22b) de l'alésage (22) servant de face de butée pour la face d'enveloppe (4) réalisée sous forme tronconique de la bague de fixation (2),
**caractérisé en ce que**
la bague de fixation (2) présente des premières fentes (8) partant d'une ouverture centrale (6) et réalisées de manière à conduire radialement vers l'extérieur, et des deuxièmes fentes (10) partant de la périphérie extérieure de la bague de fixation (2) et réalisées dans la direction de l'ouverture centrale (6).

2. Piston selon la revendication 2, **caractérisé en ce que** la bague de fixation (2) présente, sur sa périphérie extérieure, un bord rabattu (12) qui est reçu dans l'état monté dans la rainure annulaire (20a, 20b).

3. Procédé de montage d'une fixation de boulon de piston qui est réalisée sous forme de bague de fixation tronconique et fendue (2), dans lequel :
- pour réaliser le montage, on prévoit un mandrin d'insertion (24) avec une face d'appui (24b) de forme tronconique pour la bague de fixation (2), et
- la bague de fixation (2) est poussée avec sa face d'enveloppe (4) sur la face d'appui (24b) du mandrin d'insertion (24) réalisée sous forme tronconique ou conique, et dans lequel
- les segments d'arc de cercle (26a à 26d) réalisés entre les fentes (8) en raison des fentes (8) prévues dans la face d'enveloppe (4) de la bague de fixation, s'élargissent de telle sorte que
- le diamètre extérieur de la bague de fixation (2) diminue d'une valeur (x) et
- que la bague de fixation (2) soit enfoncée dans un alésage de dimension correspondante (16) du piston (14).

4. Procédé selon la revendication 3, **caractérisé en ce que** le mandrin d'insertion (24) présente les trois portions suivantes :
- une première portion cylindrique (24a), qui peut être introduite dans un alésage (22) d'un boulon de piston (18),
- une deuxième portion qui est réalisée sous forme de face d'appui tronconique (24b), et
- une troisième portion qui est pourvue d'une douille (24c), dont le côté frontal tourné vers la bague de fixation (2) coïncide par son diamètre essentiellement avec le diamètre extérieur de la bague de fixation (2).
